# EUROPÄISCHE PATENTSCHRIFT

(11) **EP 3 085 566 B1**
(45) Veröffentlichungstag und Bekanntmachung des Hinweises auf die Patenterteilung: **01.11.2017**
(21) Anmeldenummer: 16155142.9
(22) Anmeldetag: 11.02.2016
(51) Int. Cl.: B60K 17/22, B60K 17/16, B60G 9/02

(54) **TRAKTOR**
TRACTOR
TRACTEUR

(30) Priorität: 21.04.2015 DE 102015106115
(43) Veröffentlichungstag der Anmeldung: 26.10.2016
(73) Patentinhaber: CLAAS Tractor S.A.S., 78141 Vélizy-Villacoublay Cedex (FR)
(72) Erfinder: Arrouart, Cyrille, 75015 Paris (FR); Naji, Salma, 28100 Dreux (FR); Saab, Roland, 92310 Sevres (FR)
(74) Vertreter: Budach, Steffen

(56) Entgegenhaltungen:
- EP-B1- 1 006 015
- WO-A1-90/06242
- DE-A1- 3 834 693
- DE-A1- 19 622 101

## Beschreibung

Die vorliegende Erfindung betrifft einen Traktor mit einem Chassis und einer Vorderachsbaugruppe, die relativ zum Chassis beweglich ist, um sich Bodenunebenheiten anpassen zu können, ohne dass das Chassis dabei jeder Bewegung der Vorderachsbaugruppe folgen muss. Eine Antriebswelle, die ein Drehmoment von einem Motor auf eine solche Vorderachsbaugruppe überträgt, muss den Bewegungen der Vorderachsbaugruppe relativ zum Chassis folgen können.

Aus der gattungsbildenden EP 1 006 015 B1 ist ein Traktor bekannt, bei dem eine Vorderachsstütze an ihrem vorderen Ende mit einem Gehäuse der Vorderachsbaugruppe befestigt und an ihrem hinteren Ende mit einem Widerlager schwenkbar verbunden ist, das an einer Bodenplatte des Chassis unterhalb der Fahrerkabine befestigt ist. Indem die Vorderachsstütze im Wesentlichen parallel zur Antriebswelle verläuft, kann sie diese von in deren Längsrichtung wirkende Kräfte weitgehend entlasten, ohne Federbewegungen der Vorderachsbaugruppe relativ zum Chassis oder Schwenkbewegungen diese um eine in Längsrichtung der Welle verlaufende Achse zu behindern. Die Zugänglichkeit der Antriebswelle für Wartungs- oder Reparaturarbeiten ist eingeschränkt, denn auch wenn das Widerlager abmontiert wird, bleibt der sich darüber erstreckende Teil der Welle oberhalb der Bodenplatte unzugänglich. Auch der Zugang zu einem vorderen Teil der Antriebswelle ist schwierig, denn selbst wenn die Vorderachsstütze von dem Gehäuse der Vorderachsbaugruppe getrennt wird, umgibt sie rohrförmig ein vorderes Ende der Welle und kann daher nicht komplett entfernt werden, ohne dass die Welle selber zerlegt wird.

Aufgabe der vorliegenden Erfindung ist, einen Traktor mit einem wartungsfreundlicheren Antriebsmechanismus für die Vorderachse zu schaffen.

Die Aufgabe wird gelöst, indem bei einem Traktor mit einem Chassis, einer Vorderachsbaugruppe, einer Vorderachsstütze, die starr mit einem Gehäuse der Vorderachsbaugruppe und schwenkbar mit einem Widerlager am Chassis verbunden ist, und einer Kardanwelle zum Antreiben von drehbaren Teilen der Vorderachsbaugruppe, die einen antriebsseitigen Wellenabschnitt, einen achsseitigen Wellenabschnitt und ein Kardangelenk zwischen den Wellenabschnitten umfasst, ein Durchgang, durch den die Kardanwelle verläuft, nach unten durch ein Brückenteil begrenzt ist, das beiderseits der Kardanwelle am Chassis verankert ist und das Widerlager aufnimmt. So kann durch Lösen des Brückenteils die Kardanwelle auf einem Großteil ihrer Länge, wenigstens bis hin zu dem Widerlager, schnell und einfach zugänglich gemacht werden.

Vorzugsweise überlappt das Brückenteil in axialer Richtung der Kardanwelle mit dem Kardangelenk. So kann es zum einen dem Kardangelenk ringsum Schutz bieten, zum anderen können auf diese Weise die Achsen von Kardanwelle und Widerlager nah aneinander herangerückt werden, was die Anforderungen an die Fähigkeit der Kardanwelle, bei Schwenkbewegungen ihre Länge anzupassen, erheblich reduziert.

Um die am Widerlager auftretenden Kräfte effizient in das Chassis einleiten zu können, ist bevorzugt, dass das Widerlager eine horizontale Welle umfasst, die in einem rechten und einem linken Lagerbock des Brückenteils gehalten ist und an die die Vorderachsstütze angelenkt ist.

Um die Belastbarkeit des Brückenteils zu optimieren, können die Lagerböcke über eine Querstrebe verbunden sein, die zwischen der Kardanwelle und der Vorderachsstütze hindurch läuft. Vorzugsweise ist diese Querstrebe mit den Lagerböcken einstückig, etwa als Gusskörper, ausgebildet.

Das Brückenteil kann ferner durch eine Rückwand versteift sein, die die Lagerböcke in Höhe der horizontalen Welle miteinander verbindet.

Wenn das Chassis ein Motorblock und einen hinter dem Motorblock angeordneten, zu Wartungs- oder Reparaturzwecken von dem Motorblock lösbaren Getriebeblock umfasst, dann sollte auch die Kardanwelle eine lösbare Verbindung zwischen dem von dem Getriebeblock ausgehenden antriebsseitigen Wellenabschnitt und dem achsseitigen Wellenabschnitt aufweisen, um einen Komplettausbau des Getriebeblocks zu ermöglichen.

Die lösbare Verbindung ist vorzugsweise in einem Zwischenraum zwischen dem Getriebeblock und dem Brückenteil zugänglich. Damit bei einem Ausbau des Getriebeblocks das Brückenteil an seinem Platz bleiben kann, sollte es am Motorblock, etwa an einer Ölwanne eines Antriebsmotors oder an einem Kupplungsgehäuse, verankert sein.

Das Chassis kann eine nach unten offene rinnenförmige Aussparung aufweisen, in die die Kardanwelle eingreift, um vor Beschädigung geschützt zu sein.

Entsprechend kann die Vorderachsstütze eine nach oben offene rinnenförmige Aussparung aufweisen, in die die Kardanwelle eingreift. Wenn diese Aussparung sich über die gesamte Länge der Vorderachsstütze erstreckt, dann kann die Vorderachsstütze im Bedarfsfall komplett entfernt und die Kardanwelle auf großer Länge freigelegt werden, ohne dass dafür die Kardanwelle selber aufgetrennt werden muss.

Wenn die Vorderachsstütze selber in die rinnenförmige Aussparung des Chassis eingreift, ist die Kardanwelle auf ihrem gesamten Umfang gut geschützt.

Die Antriebswelle sollte ein teleskopisch längenveränderliches Element aufweisen, um Verschiebungen ausgleichen zu können, die sich bei einer Schwingbewegung der Vorderachsstütze aufgrund einer nicht perfekten Übereinstimmung der Achsen von Vorderachsstütze und Kardanwelle ergeben.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht von Chassis und Achsbaugruppen eines Traktors;
- Fig. 2: das Chassis und die Achsbaugruppen in einer perspektivischen Ansicht schräg von unten;
- Fig. 3: ein Detail des Aufbaus aus Fig. 1 und 2 in einem schematischen Querschnitt;
- Fig. 4: die Vorderachsbaugruppe und mit ihr zusammenhängende Teile;
- Fig. 5: die sich durch einen Durchgang eines Brückenteils erstreckende Kardanwelle; und
- Fig. 6: eine perspektivische Ansicht schräg von unten eines Teils des Chassis und der daran angelenkten Vorderachsstütze.

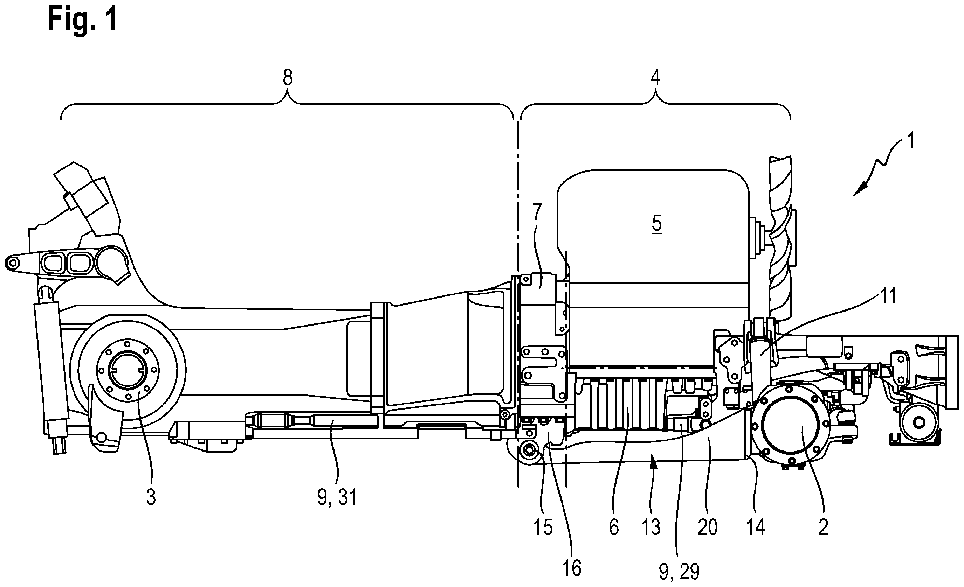

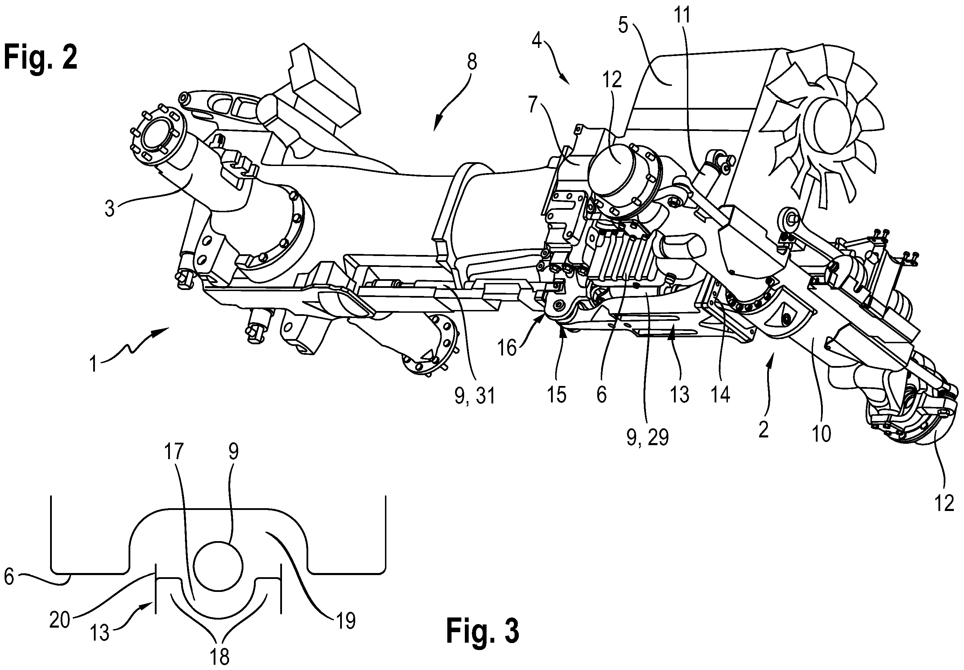

Fig. 1 und 2 zeigen in einer Seitenansicht und einer perspektivischen Ansicht schräg von unten Chassis 1 und Achsbaugruppen 2, 3 eines erfindungsgemäßen Traktors. Ein vorderer Teil des Chassis 1 ist durch einen Motorblock 4 gebildet. Der Motorblock 4 umfasst einen Dieselmotor 5, ein an eine Rückseite des Dieselmotors anschließendes Kupplungsgehäuse 7 und eine unter dem Dieselmotor verschraubte Ölwanne 6. An der Rückseite des Kupplungsgehäuses 7 ist ein Getriebeblock 8 verschraubt. Der Getriebeblock 8 umfasst ein von dem Dieselmotor über die Kupplung des Kupplungsgehäuses 7 angetriebenes Schaltgetriebe sowie ein Verteilergetriebe, das das Drehmoment des Motors auf die mit dem Getriebeblock 8 starr verbundene Hinterachsbaugruppe 3, Zapfwellenanschlüsse an Bug und Heck des Traktors sowie, über eine sich unter dem Kupplungsgehäuse 7 und der Ölwanne 6 her erstreckende Kardanwelle 9, auf die Vorderachsbaugruppe 2 verteilt.

Die Vorderachsbaugruppe 2 umfasst ein starres Gehäuse 10, das mit dem Motorblock über zwei Federbeine 11 verbunden und so relativ zum Motorblock 4 sowohl vertikal als auch um eine in Längsrichtung des Traktors orientierte Achse pendelnd beweglich ist. Die Kardanwelle 9 greift in an sich bekannter und deshalb hier nicht im Detail dargestellter Weise an einem Differenzial im Gehäuse 10 an, das wiederum das Drehmoment auf Radnaben 12 an den Enden der Vorderachsbaugruppe 2 verteilt.

Um die Kardanwelle 9 von in der Längsrichtung auf die Vorderachsbaugruppe 2 einwirkenden Kräften zu entlasten, ist eine Vorderachsstütze 13 mit ihrem vorderen Ende an einem Flansch 14 des Gehäuses 10 fest verschraubt und mit ihrem hinteren Ende an einem Widerlager 15 angelenkt, das seinerseits über ein Brückenteil 16 fest mit dem Kupplungsgehäuse 7 verbunden ist.

Wie in dem schematischen Schnitt der Fig. 3 zu erkennen, bildet die Vorderachsstütze 13 auf einem überwiegenden Teil ihrer Länge eine nach oben offene Rinne 17, in die die Kardanwelle 9 je nach momentaner Auslenkung der Federbeine 11 mehr oder weniger weit eingreift. In einem Mittelabschnitt ist die Vorderachsstütze 13 versteift durch Profile in Form von nach unten offenen Rinnen 18, die die Rinne 17 auf beiden Seiten flankieren.

Der Rinne 17 gegenüberliegend ist eine nach unten offene Rinne 19 in der Ölwanne 6 gebildet, die ebenfalls wenigstens einen Teil des Querschnitts der Kardanwelle 9 aufnimmt. Wie in Fig. 1 zu erkennen, variieren die Tiefen der Rinnen 17, 19 über die Länge der Kardanwelle 9, so dass über einem hinteren Bereich der Vorderachsstütze 13 die Kardanwelle 9 komplett in der Rinne verschwindet, während jenseits einer Vorderkante der Ölwanne 6 Seitenwände 20 der Vorderachsstütze 14 hochgezogen sind, um die Kardanwelle 9 seitwärts abzuschirmen und eine starre Anbindung für den Flansch 14 zu bilden.

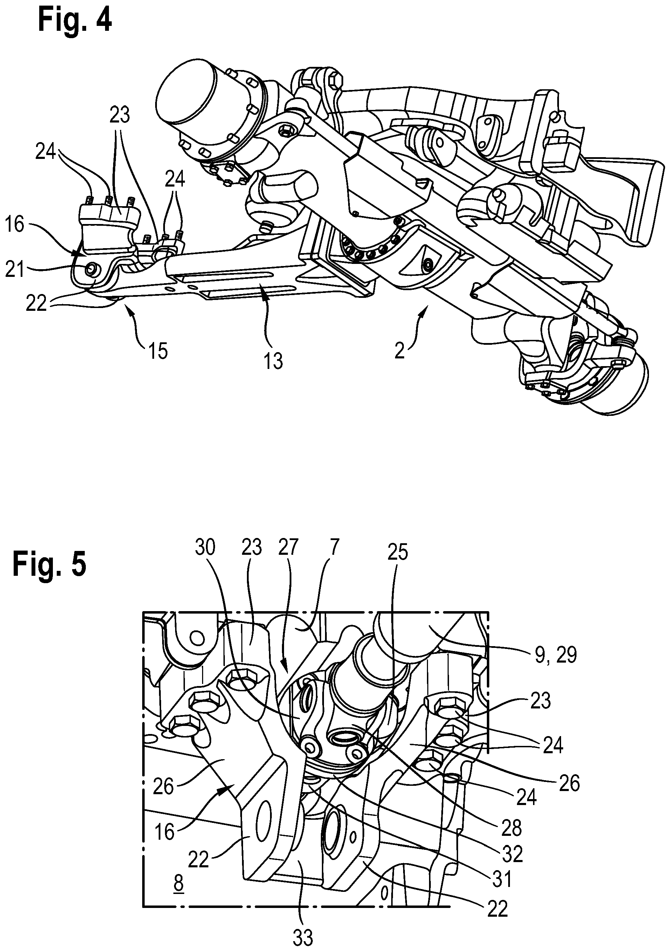

Fig. 4 zeigt die Vorderachsbaugruppe 2, die Vorderachsstütze 13 und das Brückenteil 16 für sich allein, ohne das Chassis 1. Am Brückenteil 16 ist eine Welle 21 zu erkennen, die horizontal zwischen zwei Lagerböcken 22 des Brückenteils 16 gehalten ist und eine zwischen den Lagerböcken 22 verborgene Kugel durchsetzt. Die Welle 21 und die Kugel bilden das Widerlager 15, das von einer Ringöse am hinteren Ende der Vorderachsstütze 13 formschlüssig und in zwei Schwenkfreiheitsgraden beweglich umgriffen ist.

Ein oberer Bereich des Brückenteils 16 ist durch zwei Flansche 23 gebildet, die sich links bzw. rechts von der (in Fig. 4 nicht dargestellten) Kardanwelle 9 erstrecken und zur Befestigung an dem Kupplungsgehäuse 7 mittels Schrauben 24 dienen.

Fig. 5 zeigt eine vergrößerte Ansicht des Brückenteils 16, wobei die Welle 21 und die daran angelenkte Vorderachsstütze 13 weggelassen sind, um den Verlauf der Kardanwelle 9 deutlicher zeigen zu können. Das Brückenteil 16 begrenzt zusammen mit der Unterseite des Kupplungsgehäuses 7 einen Durchgang 25, durch den sich die Kardanwelle 9 erstreckt. Zwischen den Flanschen 23 und den Lagerböcken 22 weist das Brückenteil 16 schräg nach unten zusammenlaufende Wandabschnitte 26 auf, die den Durchgang 25 so geräumig machen, dass ein Kardangelenk 27 darin Platz findet.

Das Kardangelenk 27 umfasst eine vordere Gabel 28, die mit einem achsseitigen Abschnitt 29 der Kardanwelle 9 fest verbunden ist, und eine hintere Gabel 30, die mit einem in Fig. 5 von dem Brückenteil 16 weitgehend verdeckten antriebsseitigen Abschnitt 31 über miteinander verschraubte Flansche 32 lösbar verbunden sind. Die Flansche 32 sind über die offene Rückseite des Durchgangs 25 zugänglich. Deswegen kann zu Reparaturzwecken ein Zugang zum Getriebe im Inneren des Getriebeblocks 8 sowie zur Kupplung im Kupplungsgehäuse 7 hergestellt werden, indem durch Lösen der Verbindung zwischen Kupplungsgehäuse 7 und Getriebeblock 8 und Trennen der Flansche 32 voneinander das Chassis 1 in zwei Teile aufgetrennt wird.

In der Ausgestaltung der Fig. 5 sind die Lagerböcke 22 des Brückenteils 16 miteinander durch eine Rückwand 33 verbunden, die sich in etwa bündig mit der Verbindung zwischen Motorblock 4 und Getriebeblock 8 ausgehend von einer Unterkante der Wandabschnitte 26 über die gesamte Höhe der Lagerböcke 22 erstreckt.

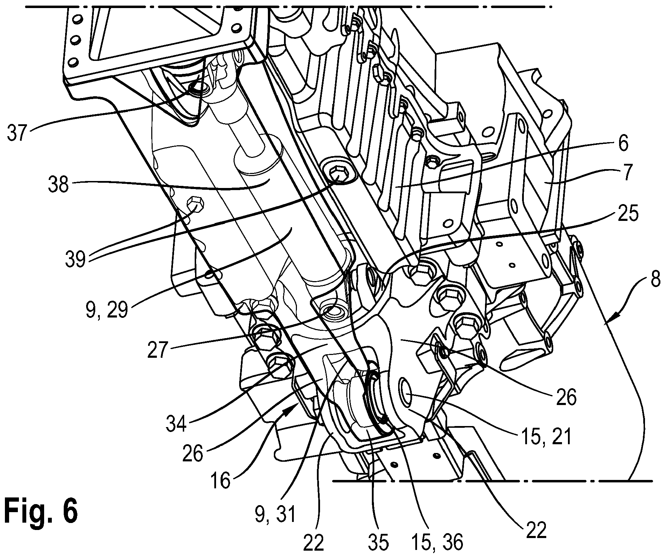

Einer in Fig. 6 gezeigten bevorzugten Weiterbildung zu Folge ist das Brückenteil 16 zusätzlich durch eine Querstrebe 34 versteift, die am vorderen Rand des Brückenteils 16 die Unterkanten der Wandabschnitte 26 miteinander verbindet die sich dabei zwischen der Kardanwelle 9 und der (in Fig. 6 transparent dargestellten) Vorderachsstütze 13 hindurch erstreckt.

In der Darstellung der Fig. 6 ist die bereits erwähnte Öse 35 am hinteren Ende der Vorderachsstütze 13 und die von ihr umgriffene Kugel 36 zu erkennen.

Zwischen dem im Durchgang 25 aufgenommenen Kardangelenk 27 und einem weiteren Kardangelenk 37 am Übergang zur Vorderachsbaugruppe 2 weist der achsseitige Abschnitt 29 der Kardanwelle ein Längenausgleichselement 38 auf, das zum Teil in der Rinne 19 der Ölwanne 6 Platz findet.

Um einen vollständigen Wechsel des Öls in der Ölwanne 6 zu ermöglichen, sind zwei durch Schrauben verschlossene Abflüsse 39 am Boden der Ölwanne 6 auf beiden Seiten der Rinne 19 vorgesehen.

### Bezugszeichen

- 1: Chassis
- 2: Vorderachsbaugruppe
- 3: Hinterachsbaugruppe
- 4: Motorblock
- 5: Dieselmotor
- 6: Ölwanne
- 7: Kupplungsgehäuse
- 8: Getriebeblock
- 9: Kardanwelle
- 10: Gehäuse
- 11: Federbein
- 12: Radnabe
- 13: Vorderachsstütze
- 14: Flansch
- 15: Widerlager
- 16: Brückenteil
- 17: Rinne
- 18: Rinne
- 19: Rinne
- 20: Seitenwand
- 21: Welle
- 22: Lagerbock
- 23: Flansch
- 24: Schraube
- 25: Durchgang
- 26: Wandabschnitt
- 27: Kardangelenk
- 28: vordere Gabel
- 29: achsseitiger Abschnitt
- 30: hintere Gabel
- 31: antriebsseitiger Abschnitt
- 32: Flansch
- 33: Rückwand
- 34: Querstrebe
- 35: Öse
- 36: Kugel
- 37: Kardangelenk
- 38: Längenausgleichselement
- 39: Abfluss

## Patentansprüche

1. Traktor mit einem Chassis (1), einer Vorderachsbaugruppe (2), einer Vorderachsstütze (13), die starr mit einem Gehäuse (10) der Vorderachsbaugruppe (2) und schwenkbar mit einem Widerlager (15) am Chassis (1) verbunden ist, und einer Kardanwelle (9) zum Antreiben von drehbaren Teilen der Vorderachsbaugruppe (2), die einen antriebsseitigen Wellenabschnitt (31), einen achsseitigen Wellenabschnitt (29) und ein Kardangelenk (27) zwischen den Wellenabschnitten (29, 31) umfasst, **dadurch gekennzeichnet, dass** ein Durchgang (25), durch den die Kardanwelle (9) verläuft, nach unten durch ein Brückenteil (16) begrenzt ist, das beiderseits der Kardanwelle (9) am Chassis (1) verankert ist und das Widerlager (15) aufnimmt.

2. Traktor nach Anspruch 1, **dadurch gekennzeichnet, dass** das Brückenteil (16) in axialer Richtung der Kardanwelle (9) mit dem Kardangelenk (27) überlappt.

3. Traktor nach einem der vorhergehenden Ansprüche, **dadurch gekennzeichnet, dass** das Widerlager (15) eine horizontale Welle (21) umfasst, die in einem rechten und einem linken Lagerbock (22) des Brückenteils (16) gehalten ist und an die die Vorderachsstütze (13) angelenkt ist.

4. Traktor nach Anspruch 3, **dadurch gekennzeichnet, dass** die Lagerböcke (22) über eine Querstrebe (34) verbunden, vorzugsweise einteilig verbunden, sind, die die Kardanwelle (9) oberhalb der Vorderachsstütze (13) unterquert.

5. Traktor nach Anspruch 4, **dadurch gekennzeichnet, dass** die Querstrebe (34) sich unter dem achsseitigen Wellenabschnitt (29) erstreckt.

6. Traktor nach einem der Ansprüche 3 bis 5, **dadurch gekennzeichnet, dass** das Brückenteil (16) eine Rückwand (33) aufweist, die die Lagerböcke (22) in Höhe der horizontalen Welle (21) verbindet.

7. Traktor nach einem der vorhergehenden Ansprüche, **dadurch gekennzeichnet, dass** das Chassis (1) einen Motorblock (4) und einen hinter dem Motorblock (4) angeordneten, von dem Motorblock (4) lösbaren Getriebeblock (8) umfasst, und dass die Kardanwelle (9) eine lösbare Verbindung (32) zwischen dem von dem Getriebeblock (8) ausgehenden antriebsseitigen Wellenabschnitt (31) und dem achsseitigen Wellenabschnitt (29) aufweist.

8. Traktor nach Anspruch 7, **dadurch gekennzeichnet, dass** die lösbare Verbindung (32) in einem Zwischenraum zwischen dem Getriebeblock (8) und dem Brückenteil (16) zugänglich ist.

9. Traktor nach einem der vorhergehenden Ansprüche, **dadurch gekennzeichnet, dass** das Brückenteil (16) an einer Ölwanne (6) eines Antriebsmotors (5) oder an einem Kupplungsgehäuse (7) verankert ist.

10. Traktor nach einem der vorhergehenden Ansprüche, **dadurch gekennzeichnet, dass** das Chassis (1) eine nach unten offene rinnenförmige Aussparung (19) aufweist, in die die Kardanwelle (9) eingreift.

11. Traktor nach einem der vorhergehenden Ansprüche, **dadurch gekennzeichnet, dass** die Vorderachsstütze (13) eine nach oben offene rinnenförmige Aussparung (17) aufweist, in die die Kardanwelle (9) eingreift.

12. Traktor nach Anspruch 11, soweit auf Anspruch 10 rückbezogen, **dadurch gekennzeichnet, dass** die Vorderachsstütze (13) in die rinnenförmige Aussparung (19) des Chassis (1) eingreift.

13. Traktor nach einem der vorhergehenden Ansprüche, **dadurch gekennzeichnet, dass** die Antriebswelle (9) ein teleskopisch längenveränderliches Element (38) aufweist.

## Claims

1. A tractor comprising a chassis (1), a front axle assembly (2), a front axle support (13) which is rigidly connected to a housing of the front axle assembly (2) and pivotably to a mounting member (15) on the chassis (1), and a cardan shaft (9) for driving rotatable parts of the front axle assembly (2), which includes a drive-side shaft portion (31), an axle-side shaft portion (22) and a cardan joint (27) between the shaft portions (29, 31), **characterised in that** a passage (25) through which the cardan shaft (9) extends is delimited downwardly by a bridge portion (16) which is anchored at both sides of the cardan shaft (9) to the chassis (1) and accommodates the mounting member (15).

2. A tractor according to claim 1 **characterised in that** the bridge portion (16) overlaps with the cardan joint (27) in the axial direction of the cardan shaft (9).

3. A tractor according to one of the preceding claims **characterised in that** the mounting member (15) includes a horizontal shaft (21) which is held in a right-hand and a left-hand bearing block (22) of the bridge portion (16) and to which the front axle support (13) is pivotably mounted.

4. A tractor according to claim 3 **characterised in that** the mounting blocks (22) are connected, preferably connected in one piece, by way of a transverse strut (34) which crosses below the cardan shaft (9) above the front axle support (13).

5. A tractor according to claim 4 **characterised in that** the transverse strut (34) extends below the axle-side shaft portion (29).

6. A tractor according to one of claims 3 to 5 **characterised in that** the bridge portion (16) has a rear wall (33) connecting the bearing blocks (22) at the height of the horizontal shaft (21).

7. A tractor according to one of the preceding claims **characterised in that** the chassis (1) has an engine block (4) and a transmission block (8) which is arranged behind the engine block (4) and is releasable from the engine block (4), and that the cardan shaft (9) has a releasable connection between the drive-side shaft portion (31) extending from the transmission block (8) and the axle-side shaft portion (29).

8. A tractor according to claim 7 **characterised in that** the releasable connection is accessible in an intermediate space between the transmission block (8) and the bridge portion (16).

9. A tractor according to one of the preceding claims **characterised in that** the bridge portion (16) is anchored to an oil sump (6) of a drive engine (5) or to a clutch housing (7).

10. A tractor according to one of the preceding claims **characterised in that** the chassis (1) has a downwardly open channel-shaped recess (19) into which the cardan shaft (9) engages.

11. A tractor according to one of the preceding claims **characterised in that** the front axle support (13) has an upwardly open channel-shaped recess (17) into which the cardan shaft (9) engages.

12. A tractor according to claim 11 when appended to claim 10 **characterised in that** the front axle support (13) engages into the channel-shaped recess (19) of the chassis (1).

13. A tractor according to one of the preceding claims **characterised in that** the drive shaft (9) has an element (38) which is telescopically variable in length.

## Revendications

1. Tracteur comprenant un châssis (1), un ensemble d'essieu avant (2), un support d'essieu avant (13) qui est relié de manière rigide à un carter (10) de l'ensemble d'essieu avant (2) et de manière pivotante à un contre-appui (15) du châssis (1), et comprenant un arbre à cardan (9) pour entraîner des parties rotatives de l'ensemble d'essieu avant (2), lequel arbre à cardan comprend une portion d'arbre côté entraînement (31), une portion d'arbre côté essieu (29) et un joint de cardan (27) entre les portions d'arbre (29, 31), **caractérisé en ce qu'**un passage (25), qui s'étend à travers l'arbre à cardan (9), est limité vers le bas par une partie de pont (16) qui est fixée au châssis (1) de part et d'autre de l'arbre à cardan (9) et qui reçoit le contre-appui (15).

2. Tracteur selon la revendication 1, **caractérisé en ce que** la partie de pont (16) se chevauche avec le joint de cardan (27) dans la direction axiale de l'arbre à cardan (9).

3. Tracteur selon une des revendications précédentes, **caractérisé en ce que** le contre-appui (15) comprend un arbre horizontal (21) qui est maintenu dans des chapes droite et gauche (22) de la partie de pont (16) et est articulé sur le support d'essieu avant (13).

4. Tracteur selon la revendication 3, **caractérisé en ce que** les chapes (22) sont reliées, de préférence reliées d'un seul tenant, par l'intermédiaire d'une traverse (34), qui passe sous l'arbre à cardan (9) au-dessus du support d'essieu avant (13).

5. Tracteur selon la revendication 4, **caractérisé en ce que** la traverse (34) s'étend sous la portion d'arbre côté essieu (29).

6. Tracteur selon une des revendications 3 à 5, **caractérisé en ce que** la partie de pont (16) comporte une paroi arrière (33) qui relie les chapes (22) à la hauteur de l'arbre horizontal (21).

7. Tracteur selon une des revendications précédentes, **caractérisé en ce que** le châssis (1) comprend un bloc-moteur (4) et un bloc de transmission (8) disposé derrière le bloc-moteur (4) et détachable du bloc-moteur (4), et **en ce que** l'arbre à cardan (9) comporte une liaison détachable (32) entre la portion d'arbre côté entraînement (31), partant du bloc de transmission (8), et la portion d'arbre côté essieu (29).

8. Tracteur selon la revendication 7, **caractérisé en ce que** la liaison détachable (32) est accessible dans un interstice compris entre le bloc de transmission (8) et la partie de pont (16).

9. Tracteur selon une des revendications précédentes, **caractérisé en ce que** la partie de pont (16) est fixée à un carter d'huile (6) d'un moteur d'entraînement (5) ou à un carter d'embrayage (7).

10. Tracteur selon une des revendications précédentes, **caractérisé en ce que** le châssis (1) comporte un évidement (19) en forme de rainure ouvert vers le bas, dans lequel pénètre l'arbre à cardan (9).

11. Tracteur selon une des revendications précédentes, **caractérisé en ce que** le support d'essieu avant (13) comporte un évidement (17) en forme de rainure ouvert vers le haut, dans lequel pénètre l'arbre à cardan (9).

12. Tracteur selon la revendication 11, pour autant que rattachée à la revendication 10, **caractérisé en ce que** le support d'essieu avant (13) pénètre dans l'évidement en forme de rainure (19) du châssis (1).

13. Tracteur selon une des revendications précédentes, **caractérisé en ce que** l'arbre d'entraînement (9) comporte un élément (38) à longueur variable télescopiquement.
